(19)

Europäisches
Patentamt
European
Patent Office
Office européen
des brevets

(11)    **EP 2 184 942 B1**

(12)    **EUROPEAN PATENT SPECIFICATION**

(45) Date of publication and mention
of the grant of the patent:
**28.03.2012  Bulletin 2012/13**

(51) Int Cl.:
***H04W 76/04*** *(2009.01)*

(21) Application number: **09013218.4**

(22) Date of filing: **20.10.2009**

(54) **Method of improving discontinuous reception functionality and related communication device**

Verfahren zur Verbesserung der diskontinuierlichen Empfangsfunktionalität und dazugehöriges
Kommunikationsgerät

Procédé d'amélioration de la fonction de réception discontinue et dispositif de communication associé

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **06.11.2008  US 111731 P**

(43) Date of publication of application:
**12.05.2010  Bulletin 2010/19**

(73) Proprietor: **Innovative Sonic Limited
Tortola (VG)**

(72) Inventors:
• **Tseng, Li-Chih
Taipei City (TW)**
• **Ou, Meng-Hui
Taipei City (TW)**

(74) Representative: **Görz, Ingo
Hoefer & Partner
Patentanwälte
Pilgersheimer Strasse 20
81543 München (DE)**

(56) References cited:
**WO-A1-2009/152367**

• **ERICSSON: "Signaling of DRX Start Offset" 3GPP
DRAFT; R2-085387 (SIGNALING OF DRX START
OFFSET), 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, no.
Prague, Czech Republic; 20080923, 23
September 2008 (2008-09-23), XP050320231
[retrieved on 2008-09-23]**
• **CATT: "DRX Start Offset configuration" 3GPP
DRAFT; R2-084266, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, no. Jeju; 20080812, 12 August
2008 (2008-08-12), XP050319354 [retrieved on
2008-08-12]**

**Description**

1. Field of the Invention

The present invention relates to a method and related communications device for improving discontinuous reception (DRX) functionality in a wireless communications system, and more particularly, to a method and related communications device for improving a start mechanism of an on duration timer of the DRX functionality, according to the claims 1 and 3, respectively. Such a method and Communication device are described in ERICSSON:"Signaling of DRX Start Offset" 3GPP DRAFT; R2-085387, 3RD GENERATION PARTNERSHIP PROJECT, MOBILE COMPETENCE CENTRE; 650, ROUTE DES LUCIOLES; F-06821 SOPHIA-ANTROPOLIS CEDEX; FRANCE, no. Prague, Czech Republic; 23 September 2008.

2. Description of the Prior Art

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simple.

In the LTE system, prior art discloses a Discontinuous Reception (DRX) functionality applied to the MAC layer for allowing a user equipment (UE) to enter a standby mode during certain periods of time and stop monitoring a Physical Downlink Control Channel (PDCCH), so as to reduce power consumption of the UE.

According to related specification, when the DRX functionality is configured, whenever a new DRX cycle begins, an on duration timer is started and the UE is awaked to monitor the PDCCH. Wherein, the DRX cycle comprises a long DRX cycle and a short DRX cycle.

When the UE enters a short DRX cycle or a long DRX cycle, the UE starts the on duration timer so as to monitor the PDCCH. The start mechanism of the on duration timer controls DRX to monitor PDCCH according to the following equations:

$$\text{Equation A: } [(SFN \times 10) + SubFN] \bmod (\text{Short DRX Cycle}) = \text{DRX Start Offset};$$

and

$$\text{Equation B: } [(SFN \times 10) + SubFN] \bmod (\text{Long DRX Cycle}) = \text{DRX Start Offset};$$

where SFN indicates a system frame number, SubFN indicates a subframe number, mod indicates modulo operation, Short DRX Cycle and Long DRX Cycle indicate a short and a long DRX cycle parameters respectively, which specify the length of the short and long DRX cycle, and DRX Start Offset indicates a DRX start offset parameter, which specifies the initial time of DRX cycle.

Please note that $[(SFN \times 10) + SubFN]$ in equation A and B represents which TTI (transmission time interval) the UE starts the on duration timer on. Detailed operation to obtain the TTI is well known by those skilled in the art, and is not narrated herein.

In short, the UE controls the timing to start the on duration timer base on the equations A and B. When the UE enters the short DRX cycle or the long DRX cycle, the corresponding equation A or B is executed. While the corresponding equation A or B is conformed, the on duration timer is started so that the UE can monitor the PDCCH. Whereas, according to the above equations A and B, a failure when using the short DRX cycle may occur due to the same DRX Start Offset for the short DRX cycle and the long DRX cycle , and hence results in problem that the UE fails to start the on duration timer to monitor the PDCCH.

In the prior art, DRX start offset parameter is set based on the long DRX cycle. In ordinary DRX functionality activated situation, the duration of the long DRX cycle is longer than the duration of the short DRX cycle, i.e. Long DRX Cycle > Short DRX Cycle, which infers that DRX Start Offset would possibily be larger than Short DRX Cycle. Therefore, while the UE is in the short DRX cycle case, if DRX Start Offset >= Short DRX Cycle, it causes the problem that the UE fails to start the on duration timer to monitor the PDCCH.

An example is illustrated as follows based on assumptions of DRX Start Offset=60, Long DRX Cycle=80, and Short DRX Cycle=40. When the UE enters the long DRX cycle and starts the on duration timer at a TTI=x, i.e. [(SFN $\times$ 10) + SubFN] = x, it can be shown that x mod 80 = 60 according to the above equation B. Therefore, the UE starts the on duration timer to monitor the PDCCH at TTIs = 60, 140, 220, 300,.... By contrast, when the UE enters the short DRX cycle and starts the on duration timer at TTI=x, it can be shown that x mod 40 = 60 according to the above equation A, which is illogical in mathematics calculation. It will cause an error in the UE system and result in problem that the UE fails to start the on duration timer to monitor the PDCCH in the short DRX cycle case.

In addition, prior art has provided a solution that when the UE enters the short DRX cycle, the UE gives a new DRX start offset parameter to be used in the above equation A situation. However, this solution leads to additional parameters or signalings.

Summary of the Invention

It is therefore an objective of the present invention to provide a further method and related apparatus of improving discontinuous reception (DRX) functionality for a user equipment (UE) of a wireless communication system. The present invention discloses a method of improving DRX functionality for a UE of a wireless communication system according to claim 1. The present invention further discloses a communication device in a UE of a wireless communication system for improving DRX functionality according to claim 3. The dependent claims define preferred embodiements thereof.

These and other objectives of the present invention will no doubt become obvious to those of ordinary skill in the art after reading the following detailed description of the preferred embodiment that is illustrated in the various figures and drawings.

Brief Description of the Drawings

FIG. 1 is a schematic diagram of a wireless communications system.
FIG. 2 is a functional block diagram of a communications device.
FIG. 3 is a schematic diagram of a program shown in FIG.2.
FIG. 4 is a flowchart of a process according to an embodiment of the present invention.

Detailed Description

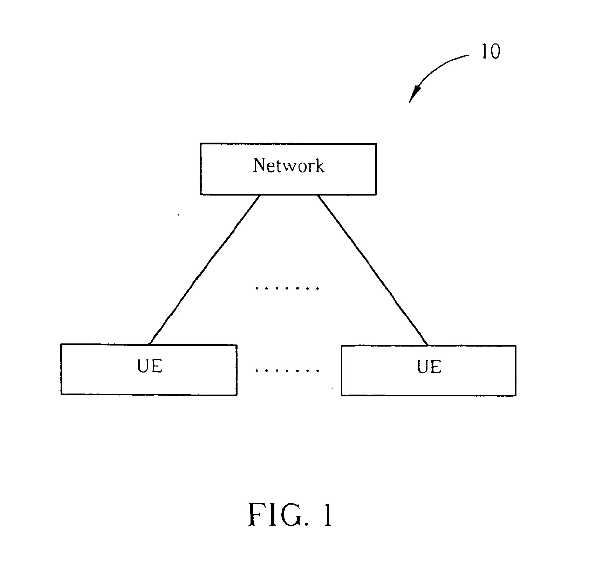

Please refer to FIG. 1, which is a schematic diagram of a wireless communications system 10. The wireless communications system 10 is preferred to be a Long Term Evolution (LTE) communications system, and is briefly formed with a network terminal and a plurality of user equipments (UEs). In FIG. 1, the network terminal and the UEs are simply utilized for illustrating the structure of the wireless communications system 10. Practically, the network terminal may include a plurality of evolved base stations (eNBs), an evolved UMTS radio access network (EUTRAN) and so on according to actual demands, and the UEs can be apparatuses such as mobile phones, computer systems, etc.

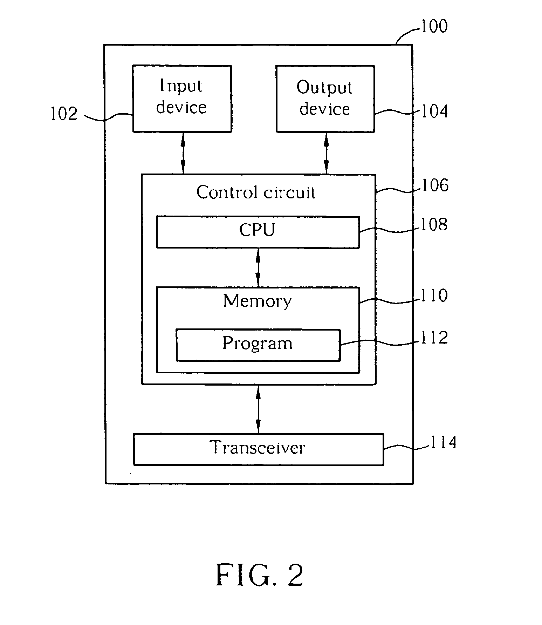

Please refer to FIG. 2, which is a functional block diagram of a communications device 100. The communications device 100 can be utilized for realizing the UE in FIG. 2. For the sake of brevity, FIG. 2 only shows an input device 102, an output device 104, a control circuit 106, a central processing unit (CPU)(or processor) 108, a memory 110, a program 112, and a transceiver 114 of the communications device 100. In the communications device 100, the control circuit 106 executes the program 112 in the memory 110 through the CPU 108, thereby controlling an operation of the communications device 100. The communications device 100 can receive signals inputted by a user through the input device 102, such as a keyboard, and can output images and sounds through the output device 104, such as a monitor or speakers. The transceiver 114 is used to receive and transmit wireless signals, deliver received signals to the control circuit 106, and output signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

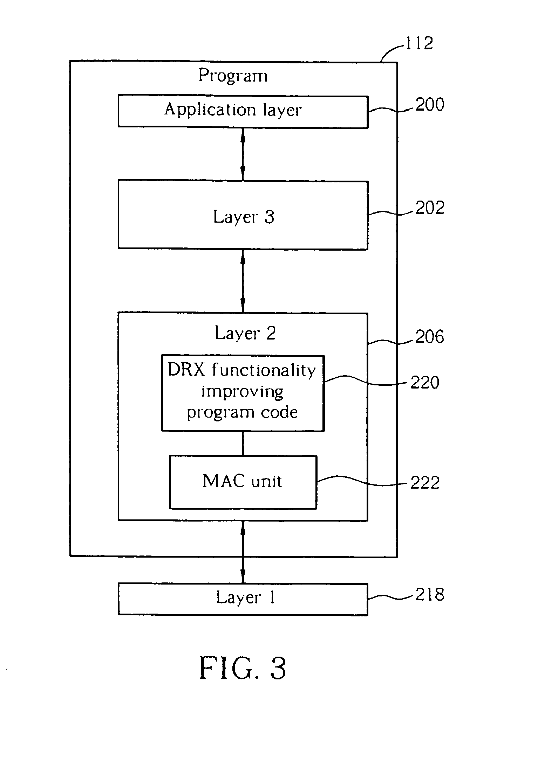

Please continue to refer to FIG. 3. FIG. 3 is a schematic diagram of the program 112 shown in FIG. 2. The program 112 includes an application layer 200, a Layer 3 202, and a Layer 2 206, and is coupled to a Layer 1 218. A MAC unit 222 located in the layer 2 206 is able to perform a plurality of HARQ processes to receive packages, and support a discontinuous Reception (DRX) functionality. The present invention provides an embodiment of a DRX functionality improving program code 220 in the program 112, which improves a start mechanism of an on duration timer of the DRX functionality, to avoid the problem that a system error occurs when the MAC unit 222 executes the DRX functionality according to a Radio Resource Control (RRC) command.

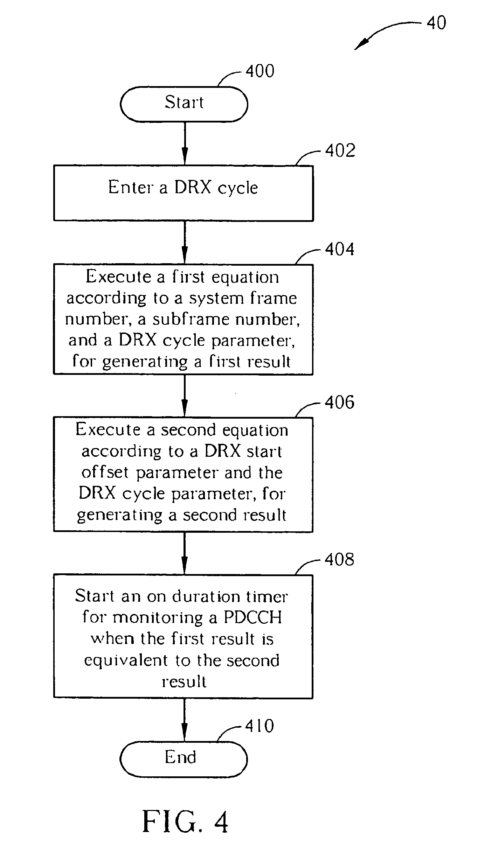

Please refer to FIG. 4. FIG. 4 is a flowchart of a process 40 according to an embodiment of the present invention.

The process 40 is used for improving DRX functionality for a UE of the wireless communication system 10 in FIG. 1, and can be compiled into the DRX functionality improving program code 220. The process 40 includes the following steps:

Step 400:     Start.

Step 402:     Enter a DRX cycle.

Step 404:     Execute a first equation according to a system frame number, a subframe number, and a DRX cycle parameter, for generating a first result.

Step 406:     Execute a second equation according to a DRX start offset parameter and the DRX cycle parameter, for generating a second result.

Step 408:     Start an on duration timer for monitoring a Physical Downlink Control Channel (PDCCH) when the first result is equivalent to the second result.

Step 410:     End.

According to the process 40, when the UE enters the DRX cycle, the UE executes a first equation according to a system frame number, a subframe number, and a DRX cycle parameter, for generating a first result, and execute a second equation according to a DRX start offset parameter and the DRX cycle parameter, for generating a second result. When the first result is equivalent to the second result, the UE starts an on duration timer for monitoring a Physical Downlink Control Channel.

In short, whether to start the on duration timer is based on the equivalence of the first result and the second result. If the first result is equivalent to the second result, the on duration timer will be started.

Preferably, the first equation is R1= [(SFNx 10) + SubFN] mod (DRX Cycle), wherein R1 indicates the first result, SFN indicates the system frame number, mod indicates modulo operation, SubFN indicates the subframe number, and DRX Cycle indicates the DRX cycle parameter. Whereby the second equation is R2= (DRX Start Offset) mod (DRX Cycle), wherein R2 indicates the second result, DRX Cycle indicates the DRX cycle parameter, mod indicates modulo operation, and DRX Start Offset indicates the DRX start offset parameter.

According to the embodiment of the present invention, if the first result and the second result generated respectively by the above first equation and the second equation are identical, the UE starts the on duration timer so as to monitor the PDCCH. Please note that the DRX cycle may be the long DRX cycle or the short DRX cycle, and correspondingly, DRX Cycle parameter may corresponds to Long DRX Cycle or Short DRX Cycle.

The embodiment of the present invention can be applied to both the long DRX cycle case and the short DRX cycle case for avoiding the problem that the UE fails to start the on duration timer to monitor the PDCCH in specific situation of the short DRX cycle case. An example is illustrated as follows based on assumptions of DRX Start Offset=60, Long DRX Cycle=80, and Short DRX Cycle=40. When the UE enters the long DRX cycle and starts the on duration timer at a TTI = y, i.e. [(SFN $\times$ 10) + SubFN] = y, it can be shown that R1 = y mod 80 according to the first equation and R2 = 60 according to the second equation. According to the embodiment of the present invention, the UE starts the on duration timer to monitor the PDCCH at the time the first result R1 equals the second result R2, that is, in the long DRX case, the UE starts the on duration timer to monitor the PDCCH at TTIs = 60, 140, 220, 300,.... Similarly, when the UE enters the short DRX cycle, it can be shown that y mod 40 = 20 according to the first result and the second result derived from the first equation and the second equation respectively. As a result, in the short DRX case, the UE starts the on duration timer to monitor the PDCCH at TTIs = 20, 60, 100...

In the prior art, when the UE enters the short DRX cycle, if the value of the DRX start offset parameter is larger than the value of the short DRX cycle parameter, the UE cannot start the on duration timer. Compared to that, in the embodiment of the present invention, when the UE enters the short DRX cycle, even if the value of the DRX start offset parameter is larger than the value of the short DRX cycle parameter, through the process 40, the on duration timer can still be started so that the UE is able to monitor the PDCCH. Meanwhile, the first equation and the second equation do not include additional parameters, thereof, the UE using the embodiment of the present invention does not require creating additional parameter or signaling.

In conclusion, the embodiment of the present invention provides a start mechanism of an on duration timer of the DRX functionality, and the problem that the UE fails to start the on duration timer to monitor the PDCCH in the short DRX cycle case is therefore avioded.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of improving discontinuous reception (DRX) functionality for a user equipment (UE) of a wireless communication system, the method comprising:

   entering a DRX cycle (402);
   executing a first equation according to a system frame number, a subframe number, and a DRX cycle parameter, for generating a first result (404), wherein the first equation is R1= [(SFN×10) + SubFN] mod (DRX Cycle), wherein R1 indicates the first result, SFN indicates the system frame number, mod indicates modulo operation, SubFN indicates the subframe number, and DRX Cycle indicates the DRX cycle parameter;
   executing a second equation according to a DRX start offset parameter and the DRX cycle parameter, for generating a second result (406), wherein the second equation is R2= (DRX Start Offset) mod (DRX Cycle), wherein R2 indicates the second result, DRX Cycle indicates the DRX cycle parameter, mod indicates modulo operation, and DRX Start Offset indicates the DRX start offset parameter; and
   starting an on duration timer for monitoring a Physical Downlink Control Channel when the first result is identical to the second result (408).

2. The method of claim 1, **characterized in that** the DRX cycle is a short DRX cycle or a long DRX cycle.

3. A communication device (100) in a user equipment (UE) of a wireless communication system (10) for improving discontinuous reception (DRX) functionality, the communication device (100) comprising:

   a control circuit (106) adapted for realizing functions of the communication device (100);
   a processor (108) installed in the control circuit (106) adapted for executing a program (112) to control the control circuit (106); and
   a memory (110) installed in the control circuit (106) coupled to the processor (108) adapted for storing the program (112);
   wherein the program (112) comprises:

      entering a DRX cycle;
      executing a first equation according to a system frame number, a subframe number, and a DRX cycle parameter, for generating a first result (404), wherein the first equation is R1= [(SFN×10) + SubFN] mod (DRX Cycle), wherein R1 indicates the first result, SFN indicates the system frame number, mod indicates modulo operation, SubFN indicates the subframe number, and DRX Cycle indicates the DRX cycle parameter;
      executing a second equation according to a DRX start offset parameter and the DRX cycle parameter, for generating a second result (406), wherein the second equation is R2= (DRX Start Offset) mod (DRX Cycle), wherein R2 indicates the second result, DRX Cycle indicates the DRX cycle parameter, mod indicates modulo operation, and DRX Start Offset indicates the DRX start offset parameter; and
      starting an on duration timer for monitoring a Physical Downlink Control Channel when the first result is identical to the second result (408).

4. The communication device of claim 3, **characterized in that** the DRX cycle is a short DRX cycle or a long DRX cycle.

## Patentansprüche

1. Verfahren zur Verbesserung einer diskontinuierlichen Empfangs (DRX-) Funktionalität für ein Nutzergerät (UE) eines drahtlosen Kommunikationssystems, wobei das Verfahren umfasst:

   - Eintreten in einen DRX-Zyklus (402);
   - Ausführen einer ersten Gleichung gemäß einer System-Frame-Nummer, einer Subframe-Nummer und eines DRX-Zyklus-Parameters, um ein erstes Ergebnis (404) zu generieren, wobei die erste Gleichung R1 = [(SFN x 10) + SubFN] mod (DRX-Zyklus) lautet, wobei R1 das erste Ergebnis kennzeichnet, SFN die System-Frame-Nummer kennzeichnet, mod eine Modulo-Operation kennzeichnet, SubFN die Subframe-Nummer kennzeichnet und DRX-Zyklus den DRX-Zyklus-Parameter kennzeichnet;
   - Ausführen einer zweiten Gleichung gemäß einem DRX-Start-Offset-Parameter und dem DRX-Zyklus-Parameter, um ein zweites Ergebnis (406) zu generieren, wobei die zweite Gleichung R2 = (DRX-Start-Offset) mod (DRX-Zyklus) lautet, wobei R2 das zweite Ergebnis kennzeichnet, DRX-Zyklus den DRX-Zyklus-Parameter kennzeichnet, mod eine Modulo-Operation kennzeichnet und DRX-Start-Offset den DRX-Start-Offset-Parameter kennzeichnet; und
- Starten eines Einschaltdauer-Timers zur Überwachung eines physikalischen Downlink-Steuerungskanals, wenn das erste Ergebnis identisch mit dem zweiten Ergebnis (408) ist.

2. Verfahren nach Anspruch 1, **dadurch gekennzeichnet, dass** der DRX-Zyklus ein kurzer DRX-Zyklus oder ein langer DRX-Zyklus ist.

3. Kommunikationsvorrichtung (100) in einem Nutzergerät (UE) eines drahtlosen Kommunikationssystems (10) zur Verbesserung einer diskontinuierlichen Empfangs- (DRX-) Funktionalität, wobei die Kommunikationsvorrichtung umfasst:

- eine Steuerungsschaltung (106), die angepasst ist, Funktionen der Kommunikationsvorrichtung (100) zu realisieren;
- einen Prozessor (108), der in der Steuerungsschaltung (106) eingebaut ist, der angepasst ist, ein Programm (112) auszuführen, um die Steuerungsschaltung (106) anzusteuern; und
- einen Speicher (110), der in der Steuerungsschaltung (106) gekoppelt mit dem Prozessor (108) eingebaut ist, der angepasst ist, das Programm (112) zu speichern;

wobei das Programm (112) umfasst:

- Eintreten in einen DRX-Zyklus;
- Ausführen einer ersten Gleichung gemäß einer System-Frame-Nummer, einer Subframe-Nummer und eines DRX-Zyklus-Parameters, um ein erstes Ergebniss (404) zu generieren, wobei die erste Gleichung R1 = [(SFN x 10) + SubFN] mod (DRX-Zyklus) lautet, wobei R1 das erste Ergebnis kennzeichnet, SFN die System-Frame-Nummer kennzeichnet, mod eine Modulo-Operation kennzeichnet, SubFN die Subframe-Nummer kennzeichnet und DRX-Zyklus den DRX-Zyklus-Parameter kennzeichnet;
- Ausführen einer zweiten Gleichung gemäß einem DRX-Start-Offset-Parameter und dem DRX-Zyklus-Parameter, um ein zweites Ergebnis (406) zu generieren, wobei die zweite Gleichung R2 = (DRX-Start-Offset) mod (DRX-Zyklus) lautet, wobei R2 das zweite Ergebnis kennzeichnet, DRX-Zyklus den DRX-Zyklus-Parameter kennzeichnet, mod eine Modulo-Operation kennzeichnet und DRX-Start-Offset den DRX-Start-Offset-Parameter kennzeichnet; und
- Starten eines Einschaltdauer-Timers zur Überwachung eines physikalischen Downlink-Steuerungskanals, wenn das erste Ergebnis identisch mit dem zweiten Ergebnis (408) ist.

4. Kommunikationsvorrichtung nach Anspruch 3, **dadurch gekennzeichnet, dass** der DRX-Zyklus ein kurzer DRX-Zyklus oder ein langer DRX-Zyklus ist.

**Revendications**

1. Procédé d'amélioration de la fonction de réception discontinue (DRX) pour un équipement utilisateur (UE) d'un système de communication sans fil, le procédé consistant à :

entrer un cycle de DRX (402) ;
exécuter une première équation en fonction d'un nombre de trames du système, d'un nombre de sous-trames et d'un paramètre de cycle de DRX, pour générer un premier résultat (404), la première équation étant R1 = [(SFN x 10) + SubFN] mod (cycle de DRX), dans laquelle R1 indique le premier résultat, SFN indique le nombre de trames du système, mod indique l'opération modulo, SubFN indique le nombre de sous-trames, et cycle de DRX indique le paramètre du cycle de DRX ;
exécuter une seconde équation en fonction d'un paramètre de décalage de début de DRX et du paramètre de cycle de DRX, pour générer un second résultat (406), la seconde équation étant R2 = (décalage de début de DRX) mod (cycle de DRX), dans laquelle R2 indique le second résultat, cycle de DRX indique le paramètre de cycle de DRX, mod indique l'opération modulo, et décalage de début de DRX indique le paramètre de décalage de début de DRX ; et
démarrer un temporisateur sur la durée pour surveiller un canal de contrôle de liaison descendante physique lorsque le premier résultat est identique au second résultat (408).

**2.** Procédé selon la revendication 1, **caractérisé en ce que** le cycle de DRX est un cycle de DRX court ou un cycle de DRX long.

**3.** Dispositif de communication (100) dans un équipement utilisateur (UE) d'un système de communication sans fil (10) pour améliorer la fonction de réception discontinue (DRX), le dispositif de communication (100) comprenant :

un circuit de commande (106) conçu pour réaliser les fonctions du dispositif de communication (100) ;
un processeur (108) installé dans le circuit de commande (106) conçu pour exécuter un programme (112) pour contrôler le circuit de commande (106) ; et
une mémoire (110) installée dans le circuit de commande (106) couplée au processeur (108) conçue pour stocker le programme (112) ;
dans lequel le programme (112) comprend les étapes consistant à :
entrer un cycle de DRX ;
exécuter une première équation en fonction d'un nombre de trames du système, d'un nombre de sous-trames et d'un paramètre de cycle de DRX, pour générer un premier résultat (404), la première équation étant R1 = [(SFN x 10) + SubFN] mod (cycle de DRX), dans laquelle R1 indique le premier résultat, SFN indique le nombre de trames du système, mod indique l'opération modulo, SubFN indique le nombre de sous-trames et cycle de DRX indique le paramètre du cycle de DRX ;
exécuter une seconde équation en fonction d'un paramètre de décalage de début de DRX et du paramètre de cycle de DRX, pour générer un second résultat (406), la seconde équation étant R2 = (décalage de début de DRX) mod (cycle de DRX), dans laquelle R2 indique le second résultat, cycle de DRX indique le paramètre de cycle de DRX, mod indique l'opération modulo, et décalage de début de DRX indique le paramètre de décalage de début de DRX ; et
démarrer un temporisateur sur la durée pour surveiller un canal de contrôle de liaison descendante physique lorsque le premier résultat est identique au second résultat (408).

**4.** Dispositif de communication selon la revendication 3, **caractérisé en ce que** le cycle de DRX est un cycle de DRX court ou un cycle de DRX long.

10

```
┌─────────────────────┐
│       Network       │
└─────────────────────┘
       /          \
      /    ......   \
     /              \
┌─────────┐      ┌─────────┐
│   UE    │......│   UE    │
└─────────┘      └─────────┘
```

FIG. 1

FIG. 2

```
                                    ┌─────── 112
        ┌──────────────────────────────┐
        │           Program            │
        │  ┌────────────────────────┐   │ ┌───── 200
        │  │   Application layer    │───┼─┘
        │  └────────────────────────┘   │
        │            ↕                  │
        │  ┌────────────────────────┐   │ ┌───── 202
        │  │                        │───┼─┘
        │  │        Layer 3         │   │
        │  │                        │   │
        │  └────────────────────────┘   │
        │            ↕                  │
        │  ┌────────────────────────┐   │ ┌───── 206
        │  │        Layer 2         │───┼─┘
        │  │  ┌──────────────────┐  │   │ ┌───── 220
        │  │  │ DRX functionality│──┼──┼─┘
        │  │  │   improving      │  │   │
        │  │  │  program code    │  │   │
        │  │  └──────────────────┘  │   │
        │  │          ↕             │   │
        │  │  ┌──────────────────┐  │   │ ┌───── 222
        │  │  │    MAC unit      │──┼──┼─┘
        │  │  └──────────────────┘  │   │
        │  └────────────────────────┘   │
        │            ↕                  │
        └──────────────────────────────┘
            ┌────────────────────────┐     ┌───── 218
            │        Layer 1         │─────┘
            └────────────────────────┘
```

FIG. 3

40

400

Start

402

Enter a DRX cycle

404

Execute a first equation according to a system frame number, a subframe number, and a DRX cycle parameter, for generating a first result

406

Execute a second equation according to a DRX start offset parameter and the DRX cycle parameter, for generating a second result

408

Start an on duration timer for monitoring a PDCCH when the first result is equivalent to the second result

410

End

FIG. 4

**EP 2 184 942 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Signaling of DRX Start Offset. *3GPP DRAFT; R2-085387,* 23 September 2008